# EUROPEAN PATENT SPECIFICATION

(11) **EP 1 494 943 B1**
(45) Date of publication and mention of the grant of the patent: **21.06.2006**
(21) Application number: 02726240.1
(22) Date of filing: 16.04.2002
(51) Int. Cl.: B65G 51/03

(54) **PROCESS AND CONVEYOR FOR TRANSPORTING SUSPENDED CONTAINERS, INSTALLATION AND PROCESS FOR MANUFACTURING AND TRANSPORTING CONTAINERS**
FÖRDERVORRICHTUNG UND VERFAHREN ZUR HÄNGENDEN FÖRDERUNG VON BEHÄLTERN, ANLAGE UND VERFAHREN ZUR HERSTELLUNG UND FÖRDERUNG VON BEHÄLTERN
PROCEDE ET CONVOYEUR DESTINE AU TRANSPORT DE CONTENANTS SUSPENDUS ET PROCEDE DE FABRICATION ET DE TRANSPORT DE CONTENANTS

(43) Date of publication of application: 12.01.2005
(73) Proprietor: Amcor Limited, Abbotsford, Victoria 3067 (AU)
(72) Inventor: HUXLEY, Colin Rose Cottage Aberoer, Wrexham LL14 4LG (GB); JANSEN, Billy 109 Charnwood Road, Northants NN17 1YR (GB)
(74) Representative: Matkowska, Franck
(86) International application number: PCT/EP2002/004217
(87) International publication number: WO 2003/086918

(56) References cited:
- WO-A-00/05160
- WO-A-01/60724
- WO-A-01/85580
- WO-A-98/09896
- WO-A-99/10263
- GB-A- 2 092 981
- US-A- 4 284 370
- US-A- 4 561 806

## Description

The invention relates mainly to the transport of suspended containers, and preferably empty plastic bottles or the like, having in their upper part a protuberance generally referred hereafter as "neck support ring". The invention more particularly relates to an improvement for decreasing the number of container jams during transport in a conveyor, and preferably, but not exclusively, in an air conveyor. The invention also advantageously requires less energy for transporting the containers.

In the field of packaging, it is nowadays common practise to use air conveyors for transporting light containers, and more especially empty plastic bottles or the like, which comprise in the area of their neck a protuberance that is commonly referred as "neck support ring". In such air conveyors, plastic bottles or the like are suspended, via their neck support ring, on two spaced-apart guide rails, commonly referred as "under-neck guides". The air conveyors are equipped with blowing means permitting the creation of a plurality of jets of air orientated towards the bottles in their direction of transport. The plastic bottles or the like, while suspended via their neck support ring, are individually propelled one behind an other by the jets of air along the under-neck guides.

Different kinds of air conveyor are disclosed, for example in publication GB-A-2 092 981 or in US patent 5,161,919. The blowing means of the air conveyors disclosed in these publications comprise a main air duct, commonly referred to as a *'plenum',* which extends along the path of the bottles or the like, and a blowing channel communicating with the main air duct via blowing slits or the like. The main duct is supplied with air, for example by means of several fans judiciously distributed over its entire length; this air is discharged via the blowing slits in the form of a plurality of air jets enabling the bottles or the like to be propelled along the blowing channel. In particular, In prior art GB-A-2 092 981, the blowing channel has a rectangular cross-section, and the blowing slits are disposed above the under-neck guides, which makes it possible to propel the bottles or the like by blowing jets of air at a level above the neck support ring of the bottles. In US patent 5,161,919, the blowing channel has the shape of an inverted V, and the blowing slits are disposed below the under-neck guides, which enables the bottles or the like to be propelled by blowing jets of air at a level below their neck support ring.

When plastic bottles, for example, are transported with the aforementioned air conveyors, with the bottles suspended via their neck support ring, they tend, during transport, to oscillate longitudinally forwards and backwards in a vertical plane parallel to their direction of transport. These forward / backward oscillation movements are known to give rise to the forward or backward jamming of the bottles in relation to the under-neck guides. Forward or backward jamming occurs, for example, when a bottle oscillates forwards or backwards to an excessive degree and becomes jammed in relation to the under-neck guides in this position, for example by the bottle immediately following or preceding it. Jamming is also frequent in the case of an accumulation of bottles. For example, when a bottle comes too quickly into contact with a train of accumulated bottles, it may roll on this bottle, tipping longitudinally backwards. In this case, the following bottle, when it comes into contact with this backward tipping bottle, exerts thereon a pressure which results in the backward tipping bottle riding up and jamming, between the under-neck guides. Likewise, when they have accumulated, the bottles are pressed against one another and tend to ride up and jam between the under under-neck guides.

Generally, when a bottle jams, a manual intervention becomes necessary in order to free the immobilised bottle and, as a result, the bottles that have accumulated behind said bottle. Such manual interventions take quite a long time and can be prejudicial in terms of productivity, particularly when it is necessary to halt the machine upstream and/or the machine downstream of the conveyor. What is more, with certain types of conveyor, it is not easy to gain access to the bottles being transported, these being, for example, transported at some height or inside a closed conveyor.

There are thus a strong need and interest to find a solution for decreasing the number of bottle jams in air conveyors, and optimally for avoiding bottle jams. In the past, some mechanical solutions have already been proposed.

A first mechanical solution is disclosed for example in PCT application WO-A-99/101263. In essence, this solution consists in the use of a add-on longitudinal block mounted above the under-neck guides, and limiting the upward thrust of the bottles or the like between the under-neck guides. A second mechanical solution is disclosed for example in PCT application WO-A-01/60724. This second solution consists in the use of a longitudinal bottom guide which extends along the path of the bottles or the like, in such a way that the bottles or the like are in contact, via their base, with said bottom guide, and are maintained inclined relative to the vertical and rearwards relative to the transport direction, thereby avoiding the aforesaid oscillation of the bottles during transport. One drawback of these mechanical solutions is that there is a risk of damaging the bottles or the like because of the mechanical contact of the neck of the bottles with the block for the first solution, or of the base of the bottles with the longitudinal guide for the second solution.

It has also been proposed in PCT application WO-A-00/05160 a solution for remotely and quickly release a bottle or the like accidentally immobilised in an air conveyor, by using reverse air jets directed towards said bottle in a direction opposite to the direction of transport. This solution involves the manufacturing of an improved and more complex air conveyor, and is therefore costly.

WO 98 098 96 A solves the problem of containes jamming in air conveyors by reducing the friction of the neckrails.

The main object of the invention is to propose an alternative low-cost: solution to the problem of containers jamming in air conveyors or the like, that is to say a solution that enables to decrease the number of container jams.

This object is achieve by the process of transporting container of claim 1 or by the process of manufacturing and transporting plastic containers of claim 8, wherein the improvement essentially consists in treating the underside of each neck support ring (that is to say the face of the neck support ring which comes into contact with the under-neck guides of the conveyor)) so as to make said underside more slippery onto the under-neck guides.

In particular, this treatment is made by applying a lubricant material, notably a lubricant liquid such as silicon oil, on the underside of the neck support ring.

When the containers are obtained by stretching and blowing a preform in a mold, in a one variant of the invention, the aforesaid treatment of the underside of the neck support ring can be performed at early stage on the neck support ring of the preforms. Nevertheless, in a preferred variant of the invention, the treatment of the underside of the neck support ring is performed at a later stage directly on the neck support ring of the containers, and preferably immediately before entering the containers into the conveyor (i.e. into the area of action of the transport air jets when an air conveyor is being used).

Further characteristics and advantages of the invention will emerge more clearly from a study of the detailed description that will now be given of two preferred embodiments of an installation for manufacturing and transporting plastic bottles according to the invention, which description is given by way of a non-limitative example and with reference to the annexed drawings, wherein:
- Figure 1 is a schematic representation of a complete installation for manufacturing and transporting plastic bottles according to a first preferred embodiment,
- Figure 2 is a detailed representation of transfer means and of the upstream part of an air conveyor of the installation of figure 1,
- Figure 3 is a close-up representation of a recess area in the top face of a guide, which recess area is intended to be supplied with lubricant material in liquid form,
- Figure 4 is a schematic diagram of lubricant supply means and their electrical circuit,
- Figure 5 is a schematic representation in cross section of the air conveyor of figure 1 or 2,
- Figure 6 is a schematic representation of a complete installation for manufacturing and transporting plastic bottles according to a second variant, and
- Figure 7 is a close-up representation of lubricating means of the installation of figure 6, which lubricating means comprise a lubricated brush.

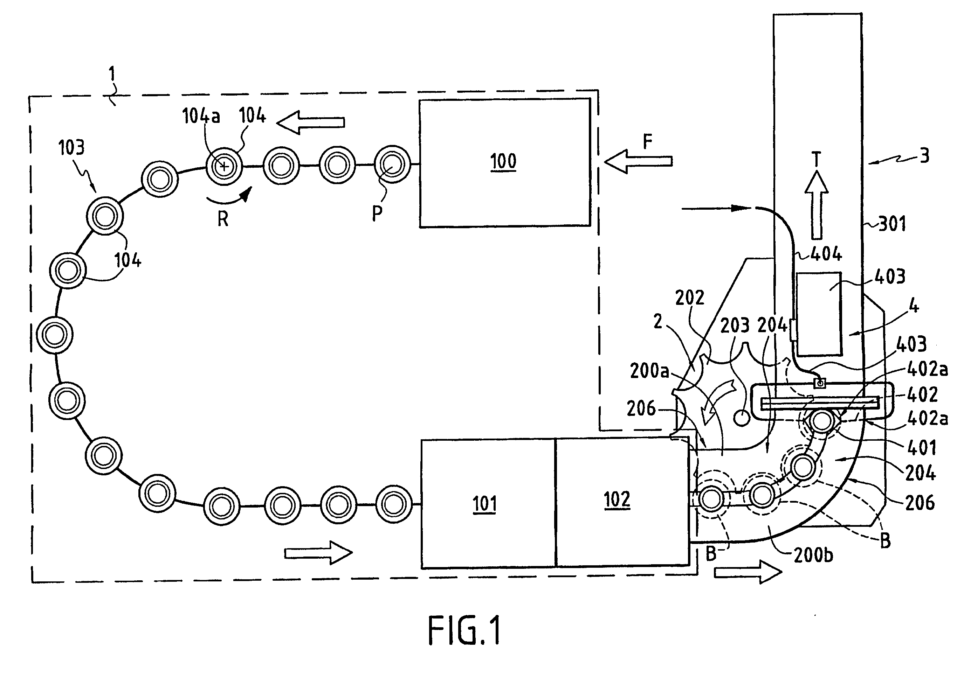

Referring to figure 1, in a first preferred embodiment, an installation for manufacturing and transporting plastic bottles B comprises :
- a manufacturing unit 1 for making plastic bottles B from preforms P,
- an air conveyor 3,
- transfer means 2 for automatically transferring the bottles B issued from the manufacturing unit 1 to the air conveyor 3,
- lubricating means 4.

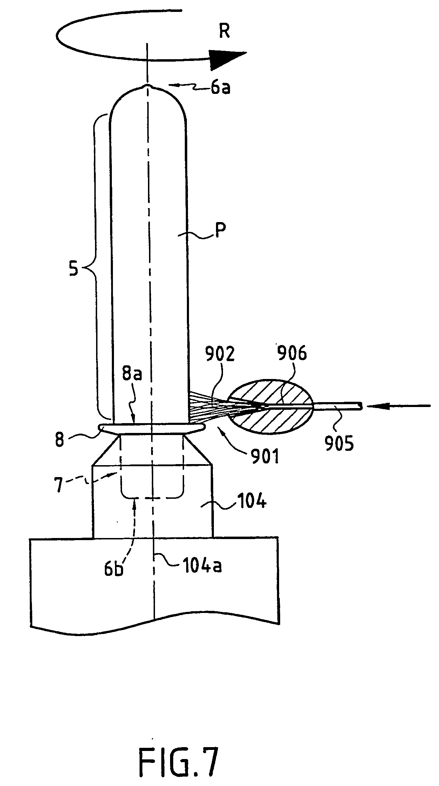

Referring now to figure 7, a preform P is a tubular and hollow piece of plastic, for example in PET or the like, having a main generally cylindrical part 5 of small height, a closed bottom end 6a, an opened mouth 6b at the opposite of the closed bottom end 6a, a neck portion 7 which is optionally threaded for receiving a cap or the like, and a neck support ring 8, which is commonly used for handling the preform and also for positioning and retaining the preform inside a blowing mold.

### Manufacturing unit (1) :

The manufacturing unit 1 is known per se in the prior art and is thus depicted very schematically on figure 1. This unit 1 is now going to be briefly described in reference to figure 1.

The manufacturing unit 1 essentially comprises:
- a first heating station 100, which in use is being automatically fed in a known manner with preforms P (figure 1/arrow F) which are stored in bulk in an hopper (not shown) ;
- a second heating station 101,
- a blowing machine 102,
- transfer means 103, for conveying the preforms P from the input of and through the first heating unit 100, and up to the output of the second heating unit 101, which output corresponds to the input of the blowing machine 102.

The first and an second units 100 and 101 are linear ovens equipped with infrared lamps for heating the preforms P.

The transfer means 103 comprise spindles 104, each spindle 104 being used for carrying and conveying one preform P in vertical position and with its bottom 6a orientated upwardly. In use, each spindle 104 is also driven in rotation on its vertical central axis 104a (figure 1 or figure 7/ arrow R).

The blowing machine is known per se and includes mainly a rotatable wheel (not shown) which carries a plurality of blowing molds, first handling means for taking successively each preform issued at the output of the second heating station 101 and for positioning said preform inside the blowing mold currently located in the area of the output of the second heating station 101, and second handling means for taking each bottle from a mold located in the area of the output of the blowing machine 102 and for positioning and suspending the said bottle B at the output of the blowing machine 102 onto spaced-apart guides 200a,200b.

In operation of the manufacturing unit 1, preforms P are automatically fed in line (i.e. one behind an other) at the input of the first heating station 100, each incoming preform P being positioned onto a spindle 104 as depicted on figure 7, the closed bottom end 6a of the preform being orientated upwardly. The preforms are conveyed by the spindles 104, one behind an other through the first and second heating stations 100 and 101, while being simultaneously rotated along their vertical central axis. Each heated preform P issued from the second heating station 101 is taken by the fist handling means of the blowing machine 102 and is positioned into an opened blowing mold located in the area of the input of the blowing machine 102. During its transfer into the blowing mold of the blowing machine 102, the preform is upset, so that the neck support ring 8 is now being orientated upwardly (and no longer downwardly). During the rotation of the wheel of the blowing machine 102, bottles are usually manufactured by mechanically stretching and blowing the preforms inside the blowing mold. Each blowing mold is successively opened when arriving in the area of the output of the blowing machine 102, an the bottle B contained inside the said mold is automatically taken away by the aforesaid second handling means of the blowing machine, and is suspended in vertical position via its neck support ring 8 onto the spaced-apart guide 200a and 200b mounted at the output of the blowing machine 102.

### Transfer means (2) :

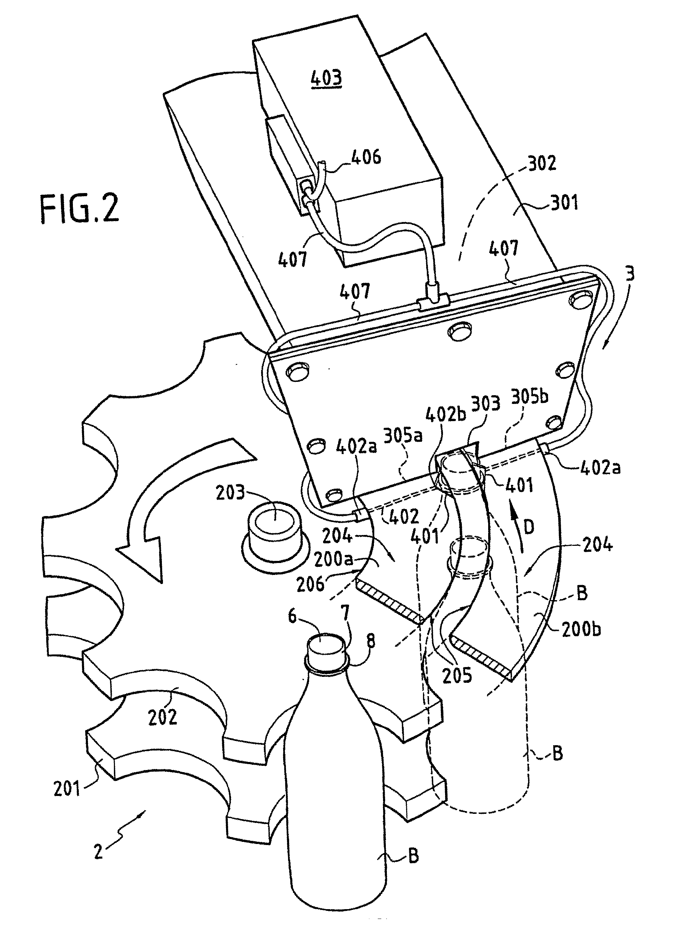

In reference to figures 1 and 2, the transfer means 2 essentially comprise the aforesaid spaced-apart guide 200a,200b, for example in stainless steel or in plastics, and bottom 201 and top 202 star wheels, which are driven together in rotation along vertical axis 203. In operation, the rotating star wheels 201 and 202 mechanically push the bottles B suspended on the guides 200a and 200b, from the output of the blowing machine 101 up to the input (I) of the air conveyor 3. On figure 2, arrow D symbolized the direction of transfer of the bottles B.

### Air conveyor (3) :

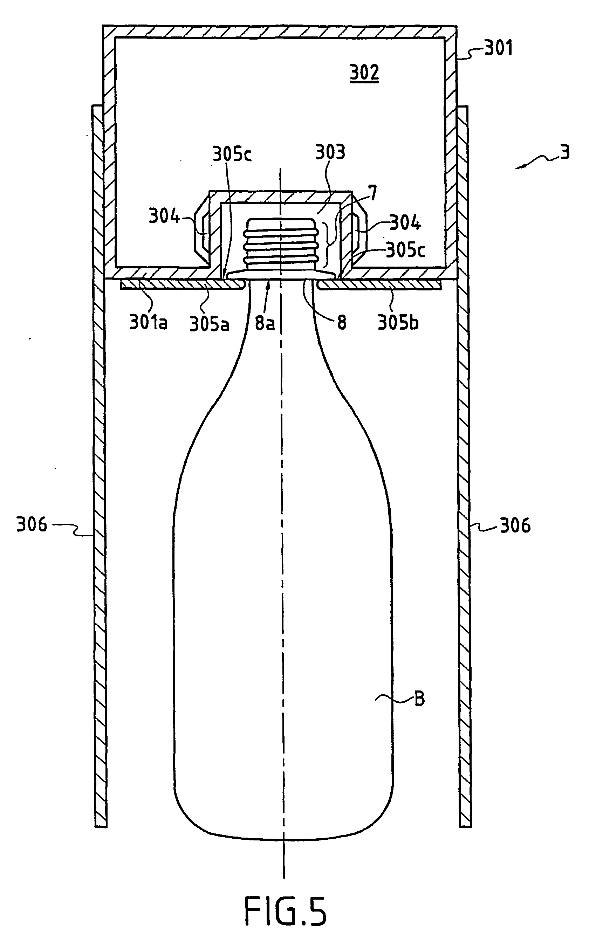

In reference to figure 5, the air conveyor 3 comprises a main air duct 301 which defines an internal chamber 302, and which extends along the path of the bottles B. In the particular example of figure 5, the duct 301 has a rectangular cross section.

The conveyor 3 also comprise several fans (not shown) judiciously distributed over the entire length of the duct 301, and being set to supply the internal chamber 302 of the duct 301 with air under pressure.

In the internal chamber 301 is further provided a central blowing channel 303 of smaller size. This blowing channel 303 communicates with the internal chamber 302, via blowing slits 304 or the like judiciously distributed over the whole length of the main duct 301.

Finally, the air conveyor 3 comprises spaced-apart under-neck guides 305a, 305b, which are fixed on the bottom wall 301a of the main duct 301 and extend continuously over the whole length of the main air duct 301. These under-neck guides 305a, 305b are positioned in a vertical plane in such a way that top support face 305c thereof is at the same level as the top face 204 of guides 200a and 200b of the transfer means, the guides 200a and 200b being thus an extension of the under-neck guides 305a and 305b.

In operation, the bottles B are suspended in vertical position, one behind an other, on the two spaced-apart under-neck guides 305a, 305b via their neck support ring 8. The fans of the air conveyor 3 are operated, thereby supplying the internal chamber 302 with air under pressure. Said air under pressure penetrates into the blowing channel 303, via the slits 304, in the form of air jets directed in the direction of transport and towards the neck portion 7 of the bottles B. The bottles B are thereby entrained along the under-neck guides 305a,305b by said air jets , while being suspended on said under-neck guides 305a,305b via their neck support ring 8.

In the particular embodiment of figure 5, the air conveyor 3 is further equipped with two lateral walls protecting the bottles B.These lateral walls are optional.

Generally, the invention is not limited to the particular structure of air conveyor shown on figure 5 , but can be implemented with all other known structures of air conveyor, provided the air conveyor comprises spaced apart under-neck guides on which the bottles can be suspended via their neck support ring, and can be propelled along said under-neck guides, under drive of air jets. In particular, but not exclusively, in another variant, the air conveyor could be designed so as to blow air jets, for propelling the bottles, in the area of the neck support ring 8 of the bottles and/or towards the body of the bottle (i.e. at a level below the neck support ring 8 of the bottles) and/or towards the neck 7 of the bottles (like the variant of figure 5).

### Lubricating means (4) :

In the particular embodiment of figures 1 and 2, lubricating means are designed generally to apply a lubricant in liquid form on the underside 8a of the neck support ring 8 of each bottle B, during the transfer of the bottles between the blowing machine 102 and the air conveyor 3.

More particularly, in the embodiment of figures 1 and 2, these lubricating means 4 comprise :
- a small recess area 401 in the top face 204 of each guide 200a and 200b,
- lubricant supply means (402,403,...) set to supply each recess area 401 with lubricant in liquid form.

Each recess area 401 is contiguous with the internal edge 205 of the guide 200a,200b, and thereby allows contact with the underside 8a of the neck support ring 8 of each bottle B. These recess areas are obtained for example by milling the top face 204 of the guides 200a,200b.

According to a preferred characteristic, each recess area 401 is provided immediately upstream from the input (I) of the blowing channel 303 of the air conveyor. In an other variant, each recess could be located at a greater distance from the air conveyor 3.

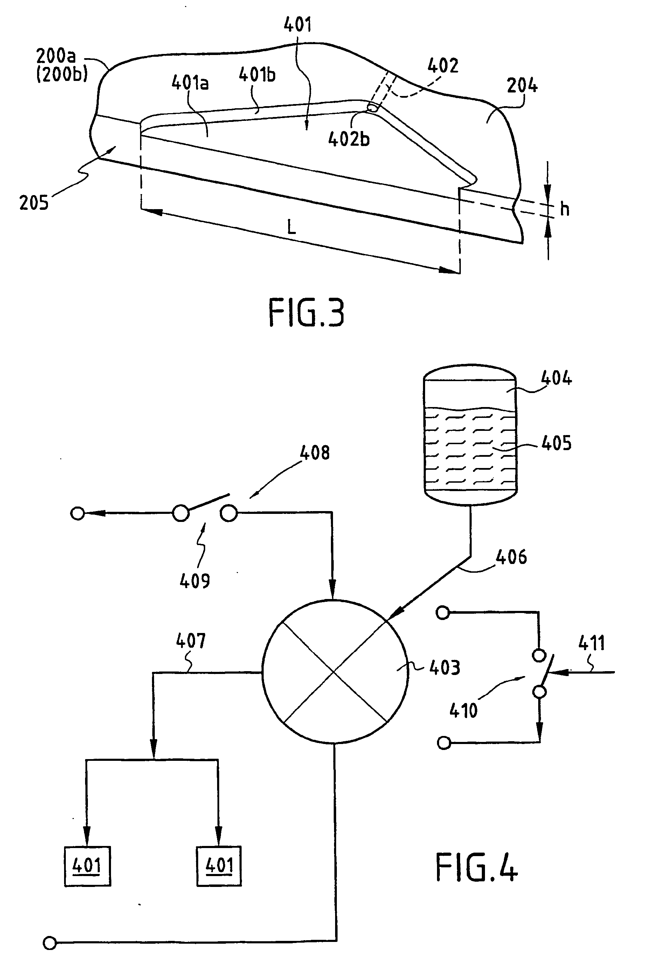

Referring now to figure 3, each recess area 401 has a very small depth (h), so as to avoid any disturbance on the conveying of the bottles, and has a triangular shape of length (L) ; this particular shape is not essential and can be modified. In a particular embodiment, given by way of a non-limitative -example, the depth (h) was equal to 2mm, and the length (L) was equal approximately to 40mm.

Aforesaid lubricant supply means (402,403,...) essentially comprise:
- two bores 402, which have been drilled in each guide 200a,200b, each bore 402 having at one end an admission opening 402a in the external edge 206 of the corresponding guide 200a or 200b (see figure 2), and at the opposite end, an output opening 402b in the edge 401b of the recess area 401 (see figure 3).
- a peristaltic pump 403
- a small reservoir 404 (figure 4) containing a lubricant 405 in liquid form
- flexible pipe 406 connecting the reservoir 404 with the input of the pump 403,
- flexible pipes 407 connecting the output of the pump 403 with the admission opening 402a of each bore 402.

Referring to figure 4, the main electrical circuit 408 for energizing the pump 403 comprises a main switch 409, which has to be closed manually by an operator for energizing the pump 403. Furthermore, the electrical circuit of the pump 403 comprises an auxiliary switch 410 which is driven by an electronic signal 411, and which allows the pump 403 to run when it is closed, (the main switch 409 being of course also closed). The electrical signal 411 is a preform infeed signal which is taken from the manufacturing unit 1. When preforms P are fed into the manufacturing unit 1, switch 410 is automatically closed ; the said switch 410 is automatically opened when no preform is fed into the manufacturing unit 1, the pump 403 being thus automatically stopped.

When the pump 403 is in service, lubricant 405 is dispensed very slowly into each recess 401, and the bottom face 401a of each recess 401 is thereby kept lubricated, thereby forming a lubricated support surface.

In a particular example, not limiting the scope of the invention, the lubricant reservoir 405 was of the gravity fed type, and has a capacity of 900ml ; the pump 403 was a peristaltic pump (0.06 rpm - 2.00 rpm), commercialised by HY-PER-GRAPH under commercial reference "Watson Marlow Model No 010-4002-00U" ; the pump was set to allow one drop of lubricant every 40s. The pipes 406,407 had an internal bore size of 0.78mm. The diameter of the bores 402 was also equal to 0,78mm. In operation, as a rough guide, approximately 62ml of lubricant were consumed, over an 11 hour period, for 300,000 bottles.

The choice of the type of lubricant 405 is not crucial for the invention. Whereas no lubricant is being introduced inside the bottles B, it has to be in practise a food approved lubricant. This lubricant can be silicon oil, like the oil commercialised by company RHODIA CHIMIE under commercial reference SILBIONE® OIL 70047 V350 or like the oil commercialised by company AMBERSIL under reference AMBERSIL C111/350 . The lubricant can also be vegetal oil incorporating emulsifying agent (s), a mixture of vegetal oil and vegetal wax incorporating emulsifying agent(s) and antioxidant agent(s).

### Operation of the installation of figure 1 :

In operation of the installation of figure 1, empty plastic bottles B are successively manufactured from preforms P in the manufacturing unit 1, then the bottles issued from the blowing machine 102 are mechanically transferred by the star wheels 201,202 to the input (I) (figure 2) of the blowing channel 303 of the air conveyor 3, while being suspended on the guides 200a,200b via their neck support ring 8.

Immediately before each bottle B penetrates into the air conveyor 3, the underside 8a of the neck support ring 8 of each bottle comes into contact and moves onto the lubricated bottom face 401a of each recess 401, said underside 8a of the neck support ring 8 being thereby lubricated. The friction coefficient of said underside 8a of the neck support ring 8 of each bottle is thus reduced, the underside 8a being afterwards more slippery on the under-neck guides 305a,305b of the air conveyor.

Once the neck 7 of each bottle B penetrated inside the blowing channel 303 of the air conveyor, that is to say is located in the area of action of the air jets, said bottle is automatically propelled by the said air jets through the air conveyor 3 (figure 1/ arrow T). At the output (not shown) of the air conveyor 3, the bottles are transferred to a downstream machine (not shown), for example a filling and capping machine.

Thanks to the aforesaid lubrication of the underside 8a of the neck support ring 8 of each bottle B, the number of bottle jams inside the air conveyor has dramatically decreased. Furthermore, pursuant to another advantage of the invention, the bottles being easier to convey, they require less pneumatic pushing forces in order to be propelled through the air conveyor 3, thereby involving a less consumption of energy for running the fans of the air conveyor.

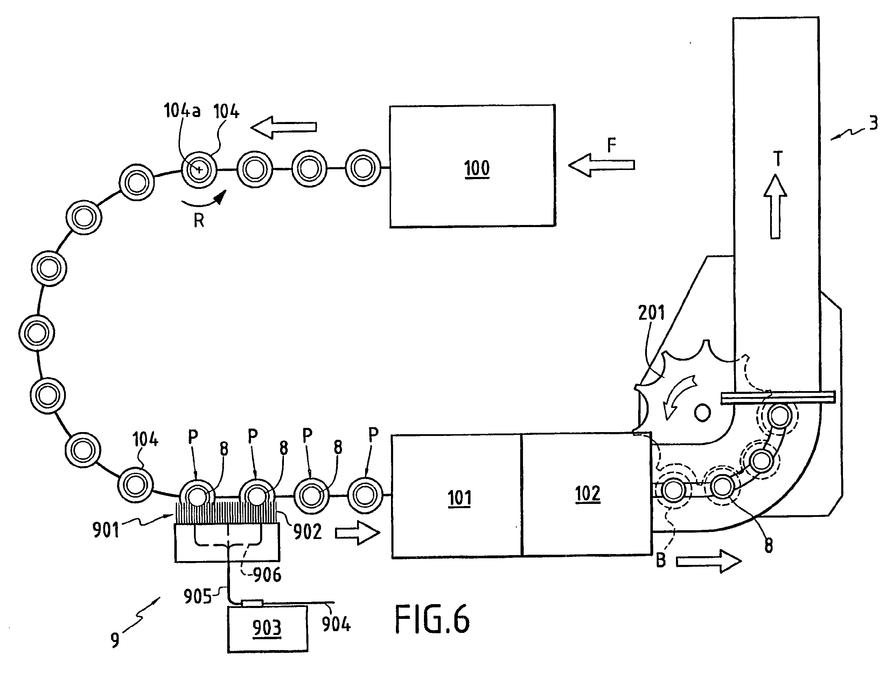

### Variant of figures 6 and 7 :

Figure 6 shows an other variant of installation for manufacturing and transporting plastic bottles, which differs from the one of figure 1 solely by the use of different lubricating means 9, which ones are described hereafter. For sake of simplicity and clarity, and in order to avoid redundancy in the description, the same references have been kept on figures 6 and 7 to identify all the elements of this second variant that are the same than the elements of the first variant of figures 1 to 5.

Generally, the lubricating means 9 of this second variant are designed to apply a lubricant in liquid form on the underside 8a of the neck support ring 8 of each preform, in particular upstream from the second heating station 101, during the transfer of the preforms between first heating station 100 and second heating station 101.

More particularly, these lubricating means 9 comprise a brush 901 having metallic piles 902 which are lubricated. Said brush 901 is mounted upstream from the second heating station 101, along the path of the spindle 104, in such a way that the piles 902 of the brush are in contact with the underside 8a of the neck support ring 8 of any each prefom P passing in front of the brush 901, as shown on figure 7. Then lubricating means 9 further comprise lubricant supply means for lubricating the piles 902 of the brush 901. Said lubricant supply means essentially comprise (figure 6) a peristaltic pump 903, flexible pipe 905 which connects the pump 903 to a lubricant reservoir (not shown), flexible pipe 905 and conducts 906 for dispensing lubricant to the piles 902 of the brush 901.

In operation (figure 7), each preform P which is carried by a spindle 104 passes in front of the brush 901, while being simultaneously rotated (arrow R) along vertical axis 104a, thereby enabling the lubricated piles 902 of the brush 901 to apply a lubricant material over the underside 8a of the neck support ring 8 which comes into contact with theses piles 902.

The invention is not limited to the two variants described above and shown on the figures. Other embodiments within the scope of the invention that is claimed will be apparent to those skilled in the art from consideration of the description and practise of the invention disclosed therein. In particular, the scope of the invention is not limited to the use of an air conveyor, but more generally encompasses all embodiments using a conveyor wherein the containers are suspended via their neck support ring or the like, on under-neck guides or the like, and are transported along said under-neck guides by any type of transport means. These transport means are preferably transport air jets, but for example in an other variant of the invention, the containers could be transported along said under-neck guides under drive only of the gravity.

## Claims

1. A Process of transporting containers (B) having a neck support ring (8) or the like , wherein the containers (B) are suspended, via their neck support ring (8), on under-neck guides (305a ; 305b) and are transported along said under-neck guides, **characterized in that** the underside (8a) of each neck support ring (8) is treated so as to make said underside (8a) more slippery onto the under-neck guides (305a ; 305b).

2. The process of claim 1 **characterized in that** the containers (B) are transported along said under-neck guides (305a ; 305b) under drive of air jets.

3. The process of claims 2 **characterized in that** the treatment of the underside of the neck support ring is performed on each container (B), immediately before entering each container (B) into the area of action of the transport air jets.

4. The process of any one of claims 1 to 3 **characterized in that** said treatment of the underside of the neck support ring is made by applying a lubricant (405) on the underside (8a) of the neck support ring (8).

5. The process of claim 4 **characterized in that** the lubricant (405) is applied in liquid form.

6. The process of claim 5 **characterized in that** the lubricant (405) is selected from the following group : silicon oil, vegetal oil incorporating emulsifying agent (s), a mixture of vegetal oil and vegetal wax incorporating emulsifying agent(s) and antioxidant agent(s).

7. The process of any one of claims 1 to 6 **characterized in that** said treatment is obtained by moving the underside (8a) of the neck support ring (8) onto a lubricated support surface (401a).

8. A process of manufacturing and transporting plastic containers (B) having a neck support ring (8), wherein, in a first step, each plastic container (B) is manufactured by stretching and blowing a preform (P) in a mold, then in a second step each stretched and blow molded container (B) is transferred into a conveyor (3) wherein each container (B) is suspended, via its neck support ring (8), on under-neck guides (305a ; 305b) of the conveyor(3), and in a third step each container (B) is transported along said under-neck guides(305a ; 305b), **characterized in that** the underside (8a) of each neck support ring (8) is treated so as to make said underside (8a) more slippery onto the under-neck guides.

9. The process of claim 8 **characterized in that** said treatment of the underside (8a) of the neck support ring (8) is made by applying a lubricant (405) on the underside of the neck support ring.

10. The process of claim 9 **characterized in that** the lubricant (405) is applied in liquid form.

11. The process of claim 10 **characterized in that** the lubricant (405) is selected from the following group: silicon oil, vegetal oil incorporating emulsifying agent (s), a mixture of vegetal oil and vegetal wax incorporating emulsifying agent(s) and antioxidant agent(s).

12. The process of any one of claims 8 to 11 **characterized in that** the treatment of the underside (8a) of the neck support ring (8) is performed on each container (B), during the second step.

13. The process of claim 12 **characterized in that** the containers being transported under drive of air jets, the treatment of the underside (8a) of the neck support ring (8) is performed on each container (B) immediately before entering each container (B) into the area of action of the transport air jets

14. The process of any one of claims 8 to 11 **characterized in that** the treatment of the underside (8a) of the neck support ring (8) is performed on the preform (P) during the first step.

15. The process of any one of claims 8 to 14 **characterized in that** said treatment is obtained by moving the underside (8a) of the neck support ring (8) of each container or preform onto a lubricated support surface (401a) .

16. The process of any one of claims 8 to 14 **characterized in that** said treatment of the underside (8a) of the neck support ring (8) is performed with a lubricated brush (901), the underside (8a) of the neck support ring (8) of each preform or container being moved into contact with said brush (901).

17. A conveyor (3) for transporting containers (B) having a neck support ring (8) or the like, said conveyor comprising spaced-apart under-neck guides (305a,305b) for suspending the containers via their neck support ring (8) or the like, **characterized in that** said conveyor is further equipped with lubricating means (4) for applying a lubricant material (105) on the underside (8a) of the neck support ring (8) of the containers.

18. The conveyor of claim 17 **characterized in that** it comprises blowing means (303) for generating transport air jets towards the containers, and **in that** said lubricating means (4) are designed to apply the lubricant material (405) upstream from the input (I) of the blowing mean (303), and preferably immediately upstream.

19. The air conveyor of claim 17 or 18 **characterized in that** the lubricating means (4) comprises a lubricated surface (401a).

20. The air conveyor of claim 19 **characterized in that** the lubricated surface is formed by the bottom face (401a) of recess areas (401) in the top face (204) of guides (200a, 200b) which are an extension of the under-neck guides (305a,305b) of the conveyor.

21. An installation for manufacturing and transporting plastic containers having a neck support ring (8), wherein the installation comprises a manufacturing unit (1) for making containers (B) from preforms (P), a conveyor (3) for transporting the plastic containers, and transfer means (2) for automatically transferring the containers issued from the manufacturing unit (1) to the conveyor (3), **characterized in that** it further comprises lubricating means (4 ; 9) for applying a lubricant material (405) on the underside (8a) of the neck support ring (8) of the preforms (P) or containers (B)

22. The installation of claim 21 **characterized in that** said lubricating means (4) are designed to apply the lubricant material (405) on the underside (8a) of the neck support ring (8) of the containers (B), at a location upstream from the input (I) of the conveyor (3), and preferably immediately upstream.

23. The installation of claim 22 **characterized in that** the lubricating means (4) comprises a lubricated surface (401a).

24. The installation of claim 22 **characterized in that** the transfer means (2) comprise spaced-part guides (200a,200b), and the lubricated surface is part of the top face (204) of said guides (200a, 200b).

25. The installation of claim 24 **characterized in that** the lubricated surface is formed by the bottom face (401a) of a recess areas (401) in the top face (204) of said guides (200a, 200b).

26. The installation of claim 21 **characterized in that** said lubricating means (9) are designed to apply the lubricant on the underside (8a) of the neck support ring (8) of the preforms (P).

27. The installation of claim 26 **characterized in that** the manufacturing unit (1) comprising a heating station (101) and a blowing machine (102), the lubricating means (9) are designed to apply the lubricant material (405) at a location upstream from the heating station (101).

28. The installation of claim 27 **characterized in that** the manufacturing unit (1) comprises rotatable spindles (104) for carrying and transferring the preforms (P), and the lubricating means (9) comprise a lubricated brush (901) mounted along the path of the spindles (104).

## Patentansprüche

1. Ein Prozess zum Transportieren von Behältern (B) mit einem Halsring (8) oder ähnlichem, wobei die Behälter (B) an ihrem Halsring (8) auf Flaschenhalsführungen (305a, 305b) gehängt sind und entlang der Flaschenhalsführungen transportiert werden, **dadurch gekennzeichnet, dass** die Unterseite (8a) jedes Halsrings (8) solcherart behandelt wird, dass die Unterseite (8a) gleitfähiger auf den Flaschenhalsführungen (305a, 305b) gemacht wird.

2. Prozess nach Anspruch 1, **dadurch gekennzeichnet, dass** die Behälter (B) durch Antrieb mit Druckluftstrahlen entlang der Flaschenhalsführungen (305a, 305b) transportiert werden.

3. Prozess nach Anspruch 2, **dadurch gekennzeichnet, dass** die Behandlung der Unterseite des Halsrings an jedem Behälter (B) durchgeführt wird, unmittelbar bevor jeder Behälter (B) in den Wirkungsbereich der Transportdruckluftstrahlen eingeführt wird.

4. Prozess nach einem der Ansprüche 1 bis 3, **dadurch gekennzeichnet, dass** die Behandlung der Unterseite des Halsrings durch das Auftragen eines Schmiermittels (405) auf die Unterseite (8a)des Halsrings (8) erfolgt.

5. Prozess nach Anspruch 4, **dadurch gekennzeichnet, dass** das Schmiermittel (405) in flüssiger Form aufgetragen wird.

6. Prozess nach Anspruch 5, **dadurch gekennzeichnet, dass** das Schmiermittel (405) aus folgender Gruppe gewählt ist: Silikonöl, Pflanzenöl mit emulgierendem/n Wirkstoff(en), eine Mischung aus Pflanzenöl und Pflanzenwachs mit emulgierendem/n Wirkstoff(en) und Antioxidationsmittel(n).

7. Prozess nach einem der Ansprüche 1 bis 6, **dadurch gekennzeichnet, dass** die Behandlung erzielt wird, indem die Unterseite (8a) des Halsrings (8) auf einer geschmierten Halterungsfläche (40la) bewegt wird.

8. Prozess zur Herstellung und zum Transport von Plastikbehältern (B) mit einem Halsring (8), wobei in einem ersten Schritt jeder Plastikbehälter (B) durch Strecken und Aufblasen eines Vorformlings (P) in einer Form hergestellt wird, dann in einem zweiten Schritt jeder durch Streckblasen geformte Behälter (B) in einen Förderer (3) transferiert wird, wobei jeder Behälter (B) an seinem Halsring (8) auf die Flaschenhalsführungen (305a, 305b) des Förderers (3) gehängt wird und in einem dritten Schritt jeder Behälter (B) entlang der Flaschenhalsführungen (305a, 305b) transportiert wird, **dadurch gekennzeichnet, dass** die Unterseite (8a) jedes Halsrings (8) solcherart behandelt wird, dass die Unterseite (8a) gleitfähiger auf den Flaschenhalsführungen gemacht wird.

9. Prozess nach Anspruch 8, **dadurch gekennzeichnet, dass** die Behandlung der Unterseite (8a) des Halsrings (8) durch das Auftragen eines Schmiermittels (405) auf die Unterseite des Halsrings erfolgt.

10. Prozess nach Anspruch 9, **dadurch gekennzeichnet, dass** das Schmiermittel (405) in flüssiger Form aufgetragen wird.

11. Prozess nach Anspruch 10, **dadurch gekennzeichnet, dass** das Schmiermittel (405) aus folgender Gruppe gewählt ist: Silikonöl, Pflanzenöl mit emulgierendem/n Wirkstoff(en), eine Mischung aus Pflanzenöl und Pflanzenwachs mit emulgierendem/n Wirkstoff(en) und Antioxidationsmittel(n).

12. Prozess nach einem der Ansprüche 8 bis 11, **dadurch gekennzeichnet, dass** die Behandlung der Unterseite (8a) des Halsrings (8) an jedem Behälter (B) während des zweiten Schritts durchgeführt wird.

13. Prozess nach Anspruch 12, **dadurch gekennzeichnet, dass** die Behälter (B) durch Antrieb mit Druckluftstrahlen transportiert werden und die Behandlung der Unterseite (8a) des Halsrings (8) an jedem Behälter (B) durchgeführt wird, unmittelbar bevor jeder Behälter (B) in den Wirkungsbereich der Transportdruckluftstrahlen eingeführt wird.

14. Prozess nach einem der Ansprüche 8 bis 11, **dadurch gekennzeichnet, dass** die Behandlung der Unterseite (8a) des Halsrings (8) an dem Vorformling während des ersten Schritts durchgeführt wird.

15. Prozess nach einem der Ansprüche 8 bis 14, **dadurch gekennzeichnet, dass** die Behandlung erzielt wird, indem die Unterseite (8a) des Halsrings (8) jedes Behälters oder Vorformlings auf einer geschmierten Halterungsfläche (401a) bewegt wird.

16. Prozess nach einem der Ansprüche 8 bis 14, **dadurch gekennzeichnet, dass** die Behandlung der Unterseite (8a) des Halsrings (8) mit einem geschmierten Pinsel (901) durchgeführt wird, wobei die Unterseite (8a) des Halsrings (8) jedes Vorformlings oder Behälters im Kontakt mit dem Pinsel (901) bewegt wird.

17. Förderer (3) zum Transportieren von Behältern (B) mit einem Halsring (8) oder ähnlichem, wobei der Förderer (3) beabstandete Flaschenhalsführungen (305a, 305b) zur Aufhängung der Behälter an ihrem Halsring (8) oder ähnlichem umfasst, **dadurch gekennzeichnet, dass** der Förderer (3) ferner mit Schmierungsmitteln (4) zum Auftragen eines Schmiermaterials (405) auf die Unterseite (8a) des Halsrings (8) der Behälter ausgestattet ist.

18. Förderer nach Anspruch 17, **dadurch gekennzeichnet, dass** er Gebläsemittel (303) zur Erzeugung von Transportdruckluftstrahlen auf die Behälter umfasst und dass die Schmierungsmittel (4) so gestaltet sind, dass sie das Schmiermaterial (405) vor der Zuführung (I) des Gebläsemittels (303) und vorzugsweise unmittelbar davor auftragen.

19. Luftförderer nach Anspruch 17 oder 18, **dadurch gekennzeichnet, dass** das Schmierungsmittel (4) eine geschmierte Oberfläche (401a) umfasst.

20. Luftförderer nach Anspruch 19, **dadurch gekennzeichnet, dass** die geschmierte Oberfläche aus der unteren Fläche (401a) eines vertieften Bereichs (401) in der oberen Fläche (204) der Führungen (200a, 200b), die eine Erweiterung der Flaschenhalsführungen (305a, 305b) des Förderers sind, gebildet wird.

21. Installation zur Herstellung und zum Transport von Plastikbehältern mit einem Halsring (8), wobei die Installation eine Fertigungseinheit (1) zur Herstellung von Behältern (B) aus Vorformlingen (P), einen Förderer (3) zum Transportieren der Plastikbehälter und Transfermittel (2) zum automatischen Transferieren der Behälter, die von der Fertigungseinheit (1) ausgegeben werden, zu dem Förderer (3) umfasst, **dadurch gekennzeichnet, dass** sie ferner Schmierungsmittel (4, 9) zum Auftragen eines Schmiermaterials (405) auf die Unterseite (8a) des Halsrings (8) der Vorformlinge (P) oder Behälter (B) umfasst.

22. Die Installation nach Anspruch 21, **dadurch gekennzeichnet, dass** die Schmierungsmittel (4) so gestaltet sind, dass sie das Schmiermaterial (405) auf die Unterseite (8a) des Halsrings (8) der Behälter (B) an einem Ort vor der Zuführung des Förderers (3) und vorzugsweise unmittelbar davor auftragen.

23. Installation nach Anspruch 22, **dadurch gekennzeichnet, dass** das Schmierungsmittel (4) eine geschmierte Fläche (401a) umfasst.

24. Installation nach Anspruch 22, **dadurch gekennzeichnet, dass** die Transfermittel (2) beabstandete Führungen (200a, 200b) umfassen und die geschmierte Fläche Teil der oberen Fläche (204) der Führungen (200a, 200b) ist.

25. Installation nach Anspruch 24, **dadurch gekennzeichnet, dass** die geschmierte Fläche durch die untere Fläche (401a) eines vertieften Bereichs (401) in der oberen Fläche (204) der Führungen (200a, 200b) gebildet wird.

26. Installation nach Anspruch 21, **dadurch gekennzeichnet, dass** die Schmierungsmittel (9) so gestaltet sind, dass sie das Schmiermaterial auf die Unterseite (8a) des Halsrings (8) der Vorformlinge (P) auftragen.

27. Installation nach Anspruch 26, **dadurch gekennzeichnet, dass** die Fertigungseinheit (1) eine Temperierstation (101) und eine Streckblasmaschine (102) umfasst und die Schmierungsmittel (9) so gestaltet sind, dass sie das Schmiermaterial (405) an einem Ort vor der Temperierstation (101) auftragen.

28. Installation nach Anspruch 27, **dadurch gekennzeichnet, dass** die Fertigungseinheit (1) drehbare Spindeln (104) zum Tragen und Transportieren der Vorformlinge (P) umfasst und die Schmierungsmittel (9) einen geschmierten Pinsel (901) umfassen, der entlang des Wegs der Spindeln (104) angebracht ist.

## Revendications

1. Procédé de transport de récipients (B) comportant une collerette (8) ou équivalent, au cours duquel les récipients (B) sont suspendus, par l'intermédiaire de leur collerette (8), sur des guides sous col (305a ;305b) et sont transportés le long de ces guides sous col, **caractérisé en ce que** la face inférieure (8a) de chaque collerette (8) est traitée en sorte de rendre cette face (8a) plus glissante sur les guides sous col (305a ; 305b).

2. Procédé selon la revendication 1 **caractérisé en ce que** les récipients (B) sont transportés le long desdits guides sous col (305a ; 305b) sous l'action de jets d'air.

3. Procédé selon la revendication 2 **caractérisé en ce que** le traitement de la face inférieure de la collerette est réalisé sur chaque récipient (B), immédiatement avant l'entrée de chaque récipient (B) dans la région d'action des jets d'air de transport.

4. Procédé selon l'une des revendications 1 à 3 **caractérisé en ce que** le traitement de la face inférieure de la collerette est réalisé en appliquant un lubrifiant (405) sur la face inférieure (8a) de la collerette (8).

5. Procédé selon la revendication 4 **caractérisé en ce que** le lubrifiant (405) est appliqué sous forme liquide.

6. Procédé selon la revendication 5 **caractérisé en ce que** le lubrifiant (405) est choisi parmi le groupe suivant : huile silicone, huile végétale comportant un ou plusieurs agents émulsifiants, un mélange d'huile végétale et de cire végétale comportant un ou plusieurs agents émulsifiants et un ou plusieurs agents anti-oxydants.

7. Procédé selon l'une des revendications 1 à 6 **caractérisé en ce que** ledit traitement est obtenu en déplaçant la face inférieure (8a) de la collerette (8) sur une surface support (401 a) lubrifiée.

8. Procédé de fabrication et de transport de récipients (B) en plastique comportant une collerette (8), au cours duquel, dans une première étape, chaque récipient (B) en plastique est fabriqué par étirage et soufflage d'une préforme (P) dans un moule, puis dans une seconde étape chaque récipient (B) obtenu par étirage et soufflage dans un moule est transféré dans un convoyeur (3) dans lequel chaque récipient (B) est suspendu, par l'intermédiaire de sa collerette (8), sur des guides sous col (305a ; 305b) du convoyeur (3), et dans une troisième étape chaque récipient (B) est transporté le long desdits guides sous col (305a ; 305b), **caractérisé en ce que** la face inférieure (8a) de chaque collerette (8) est traitée en sorte de rendre ladite face inférieure (8a) plus glissante sur les guides sous col.

9. Procédé selon la revendication 8 **caractérisé en que** ledit traitement de la face inférieure (8a) de la collerette (8) est réalisé en appliquant un lubrifiant (405) sur la face inférieure de la collerette.

10. Procédé selon la revendication 9 **caractérisé en que** le lubrifiant (405) est appliqué sous forme liquide.

11. Procédé selon la revendication 10 **caractérisé en que** le lubrifiant (405) est choisi parmi le groupe suivant : huile silicone, huile végétale comportant un ou des agents émulsifiants, un mélange d'huile végétale et de cire végétale comportant un ou plusieurs agents émulsifiants et un ou plusieurs agents anti-oxydant.

12. Procédé selon l'une des revendications 8 à 11 **caractérisé en que** le traitement de la face inférieure (8a) de la collerette (8) est réalisé sur chaque récipient (B), au cours de la deuxième étape.

13. Procédé selon la revendication 12 **caractérisé en que** les récipients étant transportés sous l'action de jets d'air, le traitement de la face inférieure (8a) de la collerette (8) est réalisé sur chaque récipient (B) immédiatement avant l'entrée de chaque récipient (B) dans la région d'action des jets d'air de transport.

14. Procédé selon l'une des revendications 8 à 11 **caractérisé en que** le traitement de la face inférieure (8a) de la collerette (8) est réalisé sur la préforme (P) au cours de la première étape.

15. Procédé selon l'une des revendications 8 à 14 **caractérisé en que** ledit traitement est obtenu en déplaçant la face inférieure (8a) de la collerette (8) de chaque récipient ou préforme sur une surface support (401 a) lubrifiée.

16. Procédé selon l'une des revendications 8 à 14 **caractérisé en que** ledit traitement de la face inférieure (8a) de la collerette (8) est réalisé avec une brosse lubrifiée (901), la face inférieure (8a) de la collerette (8) de chaque préforme ou récipient étant déplacée au contact de ladite brosse (901).

17. Convoyeur (3) permettant transporter des récipients (B) comportant une collerette (8) ou équivalent, ledit convoyeur comportant des guides sous col (305a,305b) espacés permettant la suspension des récipients par l'intermédiaire de leur collerette (8) ou équivalent, **caractérisé en ce que** ledit convoyeur est en outre équipé de moyens de lubrification (4) permettant d'appliquer un matériau lubrifiant (105) sur la face inférieure (8a) de la collerette (8) des récipients.

18. Convoyeur selon la revendication 17 **caractérisé en ce qu'**il comporte des moyens de soufflage (303) pour générer des jets d'air de transport en direction des récipients, et **en ce que** les moyens de lubrification (4) sont conçus pour appliquer le matériau lubrifiant (405) en amont de l'entrée (I) des moyens de soufflage (303), et de préférence immédiatement en amont.

19. Convoyeur à air selon la revendication 17 à 18 **caractérisé en ce que** les moyens de lubrification (4) comportent une surface lubrifiée (401 a).

20. Convoyeur à air selon la revendication 19 **caractérisé en ce que** la surface lubrifiée est constituée par la face inférieure (401a) de zones en creux (401) dans la face supérieure (204) de guides (200a, 200b) qui sont une extension des guides sous col (305a,305b) du convoyeur.

21. Installation pour la fabrication et le transport de récipients en plastique comportant un collerette (8), laquelle installation comprend une unité de fabrication (1) pour fabriquer des récipients (B) à partir de préformes (P), un convoyeur (3) pour transporter les récipients en plastique et des moyens de transfert (2) pour transférer automatiquement jusqu'au convoyeur (3) les récipients qui sont issus de l'unité de fabrication (1), **caractérisée en ce qu'**elle comprend en outre des moyens de lubrification (4 ; 9) pour appliquer un matériau lubrifiant (405) sur la face inférieure (8a) de la collerette (8) des préformes (P) ou récipients (B).

22. Installation selon la revendication 21 **caractérisée en ce que** lesdits moyens de lubrification (4) sont conçus pour appliquer le matériau lubrifiant (405) sur la face inférieure (8a) de la collerette (8) des récipients (B), en amont de l'entrée (I) du convoyeur (3), et de préférence immédiatement en amont.

23. Installation selon la revendication 22 **caractérisée en ce que** les moyens de lubrification (4) comportent une surface lubrifiée (410a).

24. Installation selon la revendication 22 **caractérisée en ce que** les moyens de transfert (2) comportent des guides espacés (200a, 200b), et la surface lubrifiée est une partie de la surface supérieure (204) desdits guides (200a, 200b).

25. Installation selon la revendication 24 **caractérisée en ce que** la surface lubrifiée est constituée par la face inférieure (401 a) de zones en creux (401) réalisées dans la face supérieure (204) desdits guides (200a, 200b).

26. Installation selon la revendication 21 **caractérisée en ce que** les moyens de lubrification (9) sont conçus pour appliquer un lubrifiant sur la face inférieure (8a) de la collerette (8) des préformes (P).

27. Installation selon la revendication 26 **caractérisée en ce que** l'unité de fabrication (1) comportant une station de chauffage (101) et une machine de soufflage (102), les moyens de lubrification (9) sont conçus pour appliquer le matériau lubrifiant (405) en amont de la station de chauffage (101).

28. Installation selon la revendication 27 **caractérisée en ce que** l'unité de fabrication (1) comporte des broches rotatives (104) pour porter et transférer les préformes (P), et les moyens de lubrification (9) comportent une brosse lubrifiée (901) montée le long du trajet des broches (104).
